# EUROPÄISCHE PATENTSCHRIFT

(11) **EP 1 025 358 B1**
(45) Veröffentlichungstag und Bekanntmachung des Hinweises auf die Patenterteilung: **27.02.2002**
(21) Anmeldenummer: 98958848.8
(22) Anmeldetag: 15.10.1998
(51) Int. Cl.: F04B 39/02, F16J 15/00

(54) **WELENDICHTUNG FÜR EINEN KÄLTEMITTELKOMPRESSOR**
SHAFT SEAL FOR A REFRIGERANT COMPRESSOR
GARNITURE ETANCHE D'ARBRE POUR COMPRESSEUR A AGENT FRIGORIGENE

(30) Priorität: 17.10.1997 DE 19745662
(43) Veröffentlichungstag der Anmeldung: 09.08.2000
(73) Patentinhaber: Bitzer Kühlmaschinenbau GmbH, 71065 Sindelfingen (DE)
(72) Erfinder: DITTRICH, Günter, D-06803 Greppin (DE); POLLRICH, Volker, D-04435 Schkeuditz (DE)
(74) Vertreter: Beck, Jürgen, Dr. Dipl.-Phys.
(86) Internationale Anmeldenummer: EP9806539
(87) Internationale Veröffentlichungsnummer: WO9920901

(56) Entgegenhaltungen:
- BE-A- 409 560
- US-A- 1 848 595
- US-A- 4 425 838
- US-A- 4 619 458
- US-A- 4 992 023

## Beschreibung

Die Erfindung betrifft einen Kompressor für Kältemittel, umfassend ein Gehäuse, mindestens ein in dem Gehäuse angeordnetes, kältemittelkomprimierendes Element, eine Welle, welche einen in dem Gehäuse verlaufenden und das kältemittelkomprimierende Element antreibenden Abschnitt, einen eine Wand des Gehäuse durchsetzenden Abschnitt und einen aus dem Gehäuse herausragenden Antriebsabschnitt aufweist, sowie eine zwischen dem die Wand durchsetzenden Abschnitt der Welle und dem Gehäuse wirksame Dichtungsanordnung mit einer Gleitringdichtung und einem Ölaufnahmeraum, in welchem sich durch die Gleitringdichtung hindurchgetretenes Öl sammelt, welcher auf einer dem antreibenden Abschnitt gegenüberliegenden Seite der Gleitringdichtung angeordnet ist und welcher einen Ölsammelbereich aufweist, aus dem Öl über einen Ölablauf abführbar ist.

Derartige Kompressoren sind aus der US 1,848,595 bekannt. Beispielsweise ist vorgesehen, daß das durch die Gleitringdichtung hindurchtretende Öl aus dem Ölaufnahmeraum über einen Ölablauf in das Gehäuse zurückfließt, wobei der Ölaufnahmeraum nicht gegenüber der den Kompressor umgebenden Luft abgeschlossen ist.

Eine derartige Lösung hat den Nachteil, daß einerseits nennenswerte Mengen von Öl aus dem Ölaufnahmeraum austreten können, für deren Auffangen gesorgt werden muß, und daß andererseits die Möglichkeit besteht, daß Luft in den Ölaufnahmeraum und über den Ölablauf in den Innenraum des Kompressors eintreten und Korrosion bewirken kann.

Der Erfindung liegt daher die Aufgabe zugrunde, einen Kompressor der gattungsgemäßen Art derart zu verbessern, daß einerseits möglichst wenig Öl austritt und andererseits ein möglichst guter Abschluß gegenüber dem Eindringen von Luft erreichbar ist.

Diese Aufgabe wird bei einem Kompressor der eingangs beschriebenen Art erfindungsgemäß dadurch gelöst, daß der Ölaufnahmeraum zwischen einem äußeren Dichtring und der Gleitringdichtung angeordnet ist und, daß der Ölsammelbereich des Ölaufnahmeraums über eine Siphonanordnung mit einem Steigkanal in Verbindung steht, welcher zu einem Auslaß für das Öl führt.

Der Vorteil der erfindungsgemäßen Lösung ist darin zu sehen, daß einerseits durch die Siphonanordnung ein Eindringen von Luft weitgehend verhindert wird und andererseits der nach der Siphonanordnung folgende Steigkanal dazu beiträgt, das Öl möglichst weitgehend in dem Ölaufnahmeraum zurückzuhalten und somit möglichst wenig Öl austreten zu lassen, wenn man davon ausgeht, daß der Steigkanal und der Ölaufnahmeraum über die Siphonanordnung hinweg nach dem Prinzip kommunizierender Röhren aufgefüllt werden.

Besonders zweckmäßig ist es dabei, wenn der Steigkanal als Ölspeicher ausgebildet ist. In diesem Fall dient der Steigkanal noch zusätzlich dazu, durch die Siphonanordnung hindurchgetretenes Öl vor einem Austreten zu speichern und schafft somit noch zusätzlich die Möglichkeit, Öl weitgehend zurückzuhalten und möglichst nicht austreten zu lassen und insbesondere in den Fällen, in welchen im Innern des Kompressors ein Unterdruck auftritt, dafür zu sorgen, daß das gespeicherte Öl wieder in diesen zurückfließt.

Hinsichtlich der Ausbildung des Steigkanals sind die unterschiedlichsten Möglichkeiten denkbar.

Beispielsweise wäre es denkbar, den Steigkanal durch ein in den Ölaufnahmeraum eingeführtes Rohr zu bilden.

Besonders zweckmäßig ist es jedoch, wenn der Steigkanal entlang einer Gehäusewand verläuft und somit möglichst wenig Raum benötigt, so daß für die erfindungsgemäße Lösung kein zusätzlicher Bauraum zur Verfügung gestellt werden muß.

Noch raumsparender ist eine Lösung, bei welcher der Steigkanal in der Gehäusewand verläuft.

Um dem Steigkanal, ohne daß dieser einen großen Querschnitt benötigt, ein möglichst großes Volumen zu geben, ist vorzugsweise vorgesehen, daß der Steigkanal als die Welle umgebender Ringkanal ausgebildet ist, welcher somit einerseits einfach anzuordnen ist und andererseits aufgrund des ringförmigen Umgebens der Welle ein sehr großes Volumen zum Speichern von Öl aufweist.

Aus fertigungstechnischen Gründen ist es besonders günstig, wenn der Steigkanal durch zwei zusammenwirkende Elemente gebildet ist, welche den Steigkanal begrenzen, so daß diese Elemente bei der Fertigung des erfindungsgemäßen Kompressors lediglich zusammengesetzt werden müssen.

Eine besonders günstige Lösung sieht dabei vor, daß eines der Elemente ein Abschnitt der Gehäusewand und das andere ein an dem Abschnitt anliegendes Einsatzteil ist, so daß eine weitere Fertigungsvereinfachung dadurch entsteht, daß eines der Elemente bereits durch einen Abschnitt der Gehäusewand gebildet werden kann und somit kein separates Teil erforderlich ist.

Besonders kostengünstig ist der Steigkanal dann durch die beiden Elemente zu bilden, wenn eines der Elemente eine Nut aufweist. Dabei könnte es prinzipiell auch denkbar sein, daß das andere Element der Elemente eine Nut aufweist und beide Nuten gemeinsam den Steigkanal bilden.

Noch einfacher ist es jedoch, wenn das andere der Elemente die Nut abdeckt.

Hinsichtlich der Lage des Steigkanals selbst wurden keine näheren Angaben gemacht. So wäre es beispielsweise denkbar, den Steigkanal außerhalb des Gehäuses vorzugsweise an diesem anzuordnende Teile zu bilden. Besonders vorteilhaft ist es jedoch, wenn der Steigkanal innerhalb einer Außenkontur des Gehäuses liegt.

Noch vorteilhafter ist es, um die Außenkontur des Gehäuses überhaupt nicht zu verändern, wenn beide zur Bildung des Steigkanals zusammenwirkende Elemente innerhalb einer Außenkontur des Gehäuses liegen.

Eine besonders günstige Lösung sieht vor, wenn eines der Elemente von der äußeren Dichtung des Kompressors gebildet ist, so daß auch hierzu kein zusätzliches Teil am Kompressor montiert werden muß, sondern die ohnehin vorhandene Dichtung zur Begrenzung des Steigkanals eingesetzt werden kann.

Hinsichtlich der Ausbildung der Siphonanordnung wurden im Zusammenhang mit der bisherigen Beschreibung der einzelnen Ausführungsbeispiele keine näheren Angaben gemacht. So sieht eine vorteilhafte Lösung vor, daß die Siphonanordnung ein einen Einlaß des Steigkanals abschließendes Ölbad umfaßt.

Vorzugsweise bildet sich dieses Ölbad in einer vor dem Einlaß in den Steigkanal liegende Ausnehmung.

Diese Ausnehmung ist dabei vorzugsweise in der Gehäusewand vorgesehen, um keine zusätzlichen Bauteile einsetzen zu müssen und somit mit ohnehin vorhandenen Teilen eine möglichst einfach zu fertigende und kostengünstige Lösung zur Verfügung zu haben.

Im einfachsten Fall ist die Ausnehmung so angeordnet, daß sie sich an die den Steigkanal bildende Nut anschließt und mit dieser überlappt, wobei durch die Überlappung auch der Einlaß für den Steigkanal gebildet ist.

Hinsichtlich der Weiterführung des Steigkanals wurden im Zusammenhang mit der bisher beschriebenen erfindungsgemäßen Lösung keine näheren Angaben gemacht. So sieht ein vorteilhaftes Ausführungsbeispiel vor, daß der Steigkanal in einen zum Auslaß führenden Auslaßkanal mündet. Damit führt der Steigkanal nicht unmittelbar aus dem Gehäuse heraus, sondern dies wird durch einen zusätzlichen Auslaßkanal geleistet, so daß der Steigkanal unabhängig von der Lage des Auslasses an der günstigsten Stelle angeordnet werden kann.

Vorzugsweise ist dabei der Auslaßkanal so ausgebildet, daß er das Gehäuse, insbesondere eine Gehäusewand desselben, durchsetzt.

Um zusätzlich ein Eindringen von Schmutz in den Auslaßkanal zu verhindern, ist der Auslaß mit einem öldurchlässigen Körper verschlossen, welcher insbesondere aus einem porösen Material, wie beispielsweise Filz- oder Sintermaterial oder ähnlichem hergestellt ist.

Um basierend auf dem Prinzip kommunizierender Röhren einem Austritt von Lecköl möglichst umfassend entgegenzutreten, ist vorzugsweise vorgesehen, daß der Auslaß auf einer dem Ölsammelbereich gegenüberliegenden Seite der Welle, vorzugsweise in einem möglichst hochliegenden Punkt des Gehäuses mindestens in Höhe einer maximalen Höhe des Ölaufnahmeraums angeordnet ist und somit ein erheblicher Füllungsgrad des Ölaufnahmeraums erforderlich ist, um Öl, insbesondere Lecköl aus dem Auslaß austreten zu lassen.

Weitere Merkmale und Vorteile der Erfindung sind Gegenstand der nachfolgenden Beschreibung sowie der zeichnerischen Darstellung einiger Ausführungsbeispiele.

### In der Zeichnung zeigen:

- Fig. 1: einen Längsschnitt durch ein erstes Ausführungsbeispiel eines erfindungsgemäßen Kompressors;
- Fig. 2: eine vergrößerte Darstellung einer erfindungsgemäßen Dichtungsanordnung zwischen einer Welle des erfindungsgemäßen Kompressors und einem Gehäuseabschnitt;
- Fig. 3: eine nochmals gegenüber Fig. 2 vergrößerte Schnittdarstellung im Bereich einer von der Welle durchsetzten Gehäusewand;
- Fig. 4: eine Darstellung gemäß Fig. 3 ohne Elemente der Gleitringdichtung und ohne die äußere Dichtung;
- Fig. 5: einen Schnitt längs Linie 5-5 in Fig. 4;
- Fig. 6: eine nochmals vergrößerte Darstellung eines Bereichs B in Fig. 4;
- Fig. 7: einen Schnitt ähnlich Fig. 4 durch ein zweites Ausführungsbeispiel;
- Fig. 8: einen Schnitt ähnlich Fig. 5 durch das zweite Ausführungsbeispiel und
- Fig. 9: einen Schnitt ähnlich Fig. 6 durch das zweite Ausführungsbeispiel.

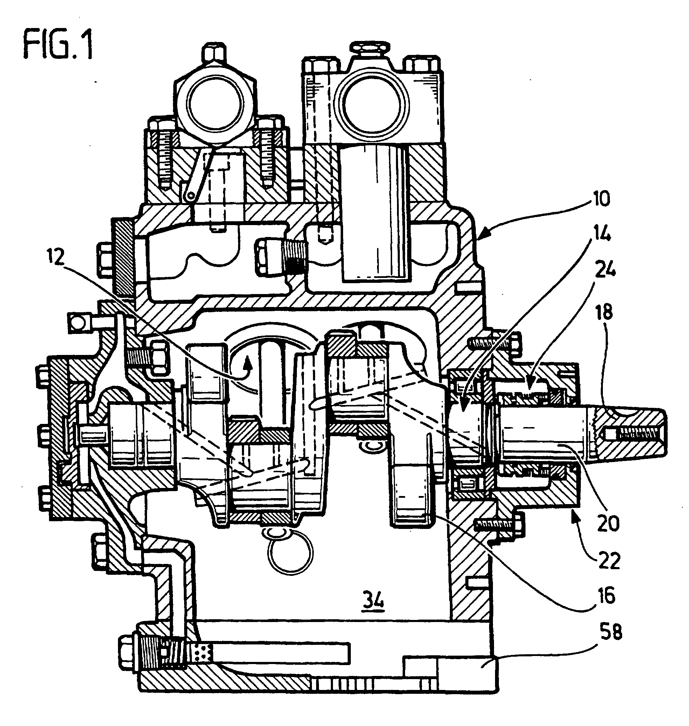

Ein in Fig. 1 dargestelltes Ausführungsbeispiel eines erfindungsgemäßen Kompressors umfaßt ein als Ganzes mit 10 bezeichnetes Gehäuse, in welchem als kältemittelkomprimierende Elemente Kolben 12 in für diese vorgesehenen Zylindern bewegbar sind.

Die Kolben 12 sind dabei durch eine als Ganzes mit 14 bezeichnete Welle angetrieben, welche einen Kurbelwellenabschnitt 16 aufweist und mit einem Antriebsabschnitt 18 über eine Seite des Gehäuses 10 übersteht. Zwischen dem Kurbelwellenabschnitt 16 und dem Antriebsabschnitt 18 ist dabei ein Abschnitt 20 der Welle 14 angeordnet, welcher gegenüber einem Abschlußdeckel 22 des Gehäuses 10 mittels einer Dichtungsanordnung 24 abgedichtet ist.

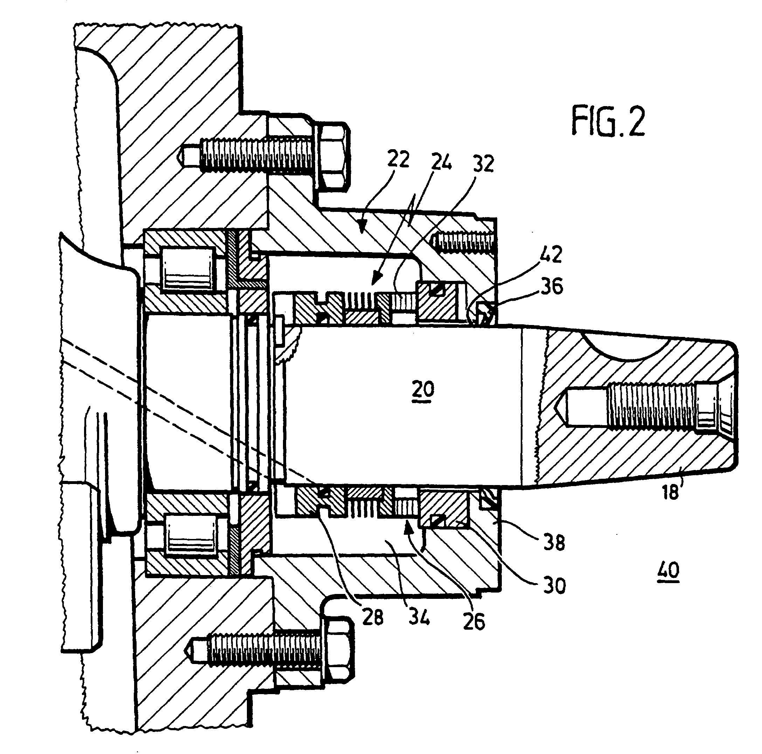

Wie in Fig. 2 dargestellt, umfaßt die vorzugsweise in dem Abschlußdeckel 22 angeordnete Dichtungsanordnung 24 eine als Ganzes mit 26 bezeichnete Gleitringdichtung, welche einen mit dem Abschnitt 20 der Welle mitdrehende Einheit 28, eine drehfest im Abschlußdeckel 22 sitzende Einheit 30 sowie einen Gleitring 32 aufweist, welcher zwischen der rotierenden Einheit 28 und der feststehenden Einheit 30 wirksam ist, um einen Gehäuseinnenraum 34 gegen nach außen austretendes Öl abzudichten.

Neben der als 26 bezeichneten Gleitringdichtung umfaßt die Dichtungsanordnung 24 noch zusätzlich einen äußeren Dichtring 36, welcher in einer von dem Abschnitt 20 der Welle 14 durchsetzten Außenwand 38 des Abschlußdeckels 22 des Gehäuses und zwar auf einer dem Innenraum 34 abgewandten Seite der Gleitringdichtung 26 angeordnet ist und zwischen der Gleitringdichtung 26 und einer äußeren Umgebung 40 des Gehäuses 10 eine weitere Abdichtung zwischen dem Gehäuse 10 und dem Abschnitt 20 der Welle 14 schafft. (Fig. 2)

Die äußere Dichtung 36 ist beispielsweise als Lippendichtung ausgebildet und umfaßt einen ringförmigen Dichtungskörper 44, von welchem ausgehend eine Dichtungslippe 46 sich in Richtung des Abschnitts 20 der Welle 14 und in Richtung der Gleitringdichtung 26 erstreckt und damit bei einer Druckerhöhung in einem zwischen der Gleitringdichtung 26 und der äußeren Dichtung 36 liegenden Ölaufnahmeraum 42 sich verstärkt an den Abschnitt 20 anlegt und somit ein sogenanntes "Durchblasen" durch die äußere Dichtung 36 verhindert.

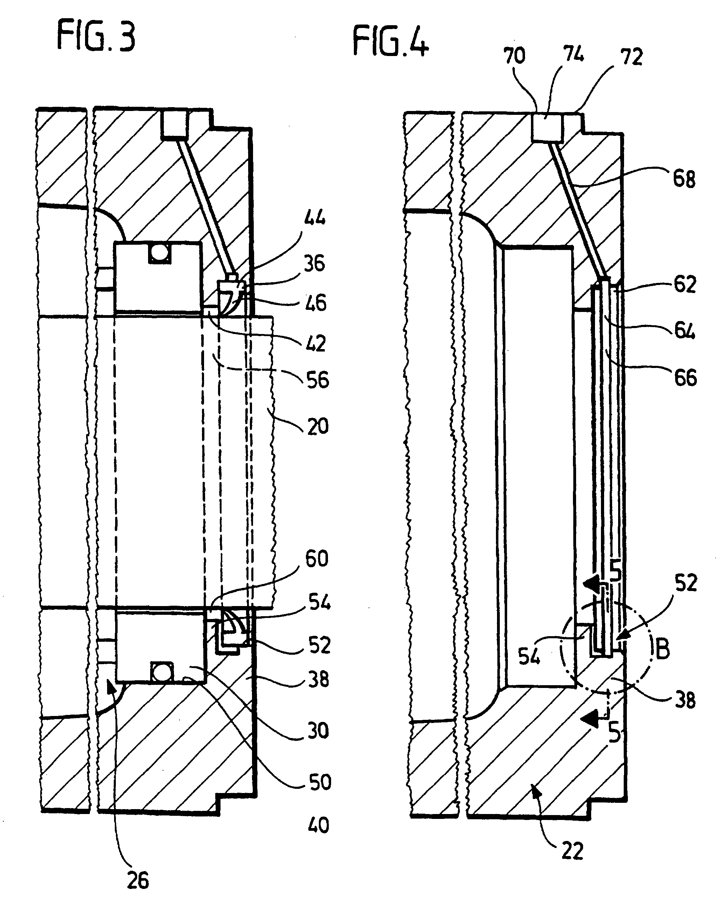

Wie in Fig. 3 noch vergrößert dargestellt, sitzt die feststehende Einheit 30 der Gleitringdichtung in einem stufenförmigen Sitz 50, welcher auf einer Innenseite der Außenwand 38 des Abschlußdeckels 22 angeordnet ist.

Ferner ist für die äußere Dichtung 36 vorzugsweise eine zur Außenseite der Außenwand 38 hin offene ringförmig und im Querschnitt stufenförmig ausgebildete Ringausnehmung 52 vorgesehen, wobei die Außenwand 38 zwischen der Ringausnehmung 52 und dem stufenförmigen Sitz 50 die Außenwand 38 einen in Richtung der Welle 14 weisenden Flansch 54 aufweist, welcher mit einer inneren Zylinderfläche 56 den als Ölaufnahmeraum 42 bezeichneten Freiraum und den Flansch 54 zwischen dem Abschnitt 20 der Welle 14 begrenzt.

Der zwischen der feststehenden Einheit 30 der Gleitringdichtung 26 und der äußeren Dichtung 36 liegende und sich ringförmig um den Abschnitt 20 der Welle 14 erstreckende Ölaufnahmeraum 42 bildet auf seiner einer Unterseite 58 des Gehäuses zugewandten tiefsten Stelle einen Ölsammelbereich 60, in welchem sich das durch die Gleitringdichtung 26 hindurchgelassene Öl, insbesondere Lecköl sammelt, das keine Möglichkeit hat, durch die äußere Dichtung 36 nach außen zu dringen.

Um für dieses Lecköl für den Fall, daß es in größeren Mengen auftritt, eine Abflußmöglichkeit zu schaffen, ist, wie in Fig. 4 dargestellt, eine kreiszylindrische Außenfläche 62 der Ringausnehmung 52 mit einer Nut 64 versehen, welche, wie in Fig. 3 dargestellt, durch den in die Ringausnehmung 52 eingepreßten ringförmigen Dichtungskörper 44 verschlossen ist und somit einen geschlossenen und den Abschnitt 20 der Welle 14 ringförmig umgebenden Steigkanal 66 bildet, welcher in einen Auslaßkanal 68 mündet, der seinerseits die Wand 38 des Abschlußdeckels 22 des Gehäuses 10 durchsetzt und in einen Auslaß 70 mündet, welcher oberhalb einer höchsten Stelle des Ölaufnahmeraums 42 beispielsweise in einer Außenmantelfläche des Abschlußdeckels 22, angeordnet ist.

Der Auslaß 70 ist dabei in seinem Querschnitt erweitert ausgebildet und nimmt seinerseits ein öldurchlässiges Verschlußelement 74, beispielsweise einen porösen, insbesondere aus Filz- oder Sintermaterial ausgebildeten Stopfen 74 auf.

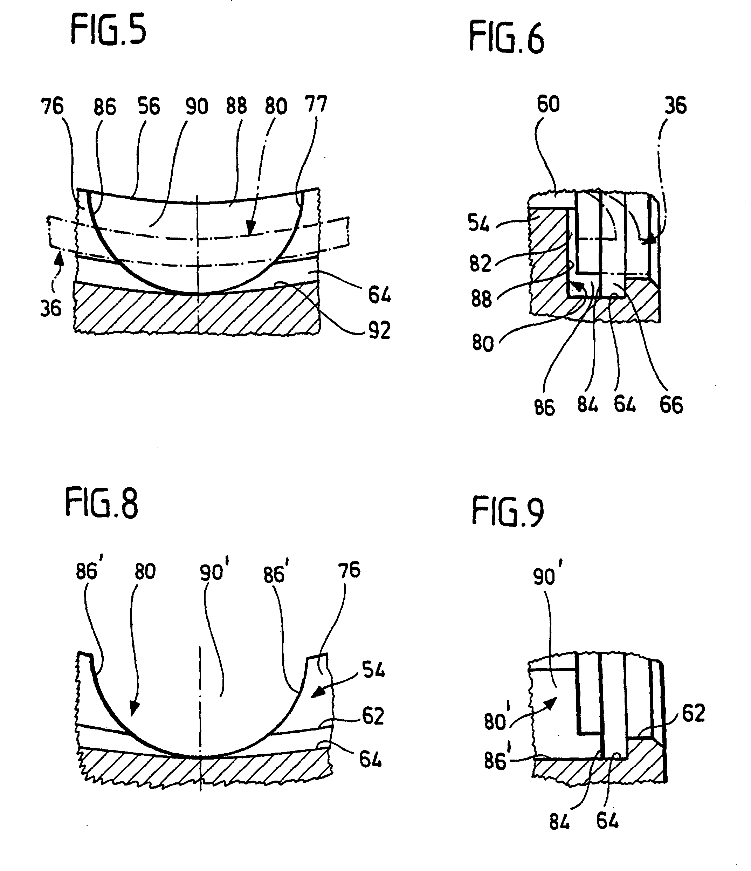

Um dem sich in dem Ölsammelbereich 60 sammelnden Öl die Möglichkeit zu geben, in den Steigkanal 66 einzutreten, ist, wie in Fig. 5 und 6 dargestellt, in den Flansch 54 eine die Ringausnehmung 52 lokal erweiternde Tasche 80 eingefräst, welche sich gegenüber der inneren Zylinderfläche 56 der kreiszylindrischen Außenfläche 62 in radialer Richtung zur Welle 14 und ausgehend von der Nut 64 bis über einer Ringflanschfläche 76 der Ringausnehmung 52 in axialer Richtung zur Welle vertieft in den Flansch 54 und die Gehäusewand 38 hineinerstreckt, so daß, wie in Fig. 3 und 6 dargestellt, zwischen der äußeren Dichtung 36 und dem Flansch 54 im Bereich der Tasche 80 ein Durchlaß 82 verbleibt, durch welchen das Öl aus dem Ölsammelbereich 60 in eine durch Seitenwände 86, 88 der Tasche 80 begrenzte Senke eintreten und dort ein Ölbad 90 bilden kann, von welchem aus das Öl über eine in einem Überlappungsbereich zwischen der Tasche 80 und der Nut 64 gebildete Einlaßöffnung 84 in die Nut 64 und somit in den Steigkanal 66 eintreten kann.

Der Durchlaß 82 mit dem die Einlaßöffnung 84 verschließenden Ölbad 90 bildet dabei eine Siphonanordnung, welche auch bei in geringen Mengen auftretendem Öl einen im wesentlichen gasdichten Abschluß zwischen dem Steigkanal 66 und dem Ölaufnahmeraum 42 bildet, so daß keine Luft und somit auch kein Sauerstoff in den Ölaufnahmeraum 42 und somit von diesem durch die Gleitringdichtung 26 in den Gehäuseinnenraum 34 des Kompressors eindringen kann.

Die Tasche 80 ist vorzugsweise in dem dem Unterteil 58 des Gehäuses 10 zugewandten tiefstliegenden Bereich der Ringausnehmung 52 vorgesehen, und erstreckt sich in radialer Richtung zu Welle 14 bis zu einem Nutgrund 92 der Nut 64 und in axialer Richtung zur Welle 14 vorzugsweise ausgehend von der Nut 64 über eine Tiefe, die größer ist als ein Abstand zwischen der Nut 64 und einer Ringflanschfläche 76 der Ringausnehmung 52, welche durch den Flansch 54 gebildet ist.

Damit verbleibt zwischen einer Stirnwand 88 der Tasche 80 und der äußeren Dichtung 36 ein genügend breiter Durchlaß 82 für sich in dem Ölsammelbereich 60 sammelndes Öl.

Der Steigkanal 66 dient erfindungsgemäß nicht nur dazu, das in diesen eintretende Öl in Richtung des Auslaßkanals 68 und letztlich des Auslasses 70 aufsteigen zu lassen, sondern auch gleichzeitig als Ölspeicher für Lecköl aus dem Ölsammelbereich 42, so daß dieses vor einem Austreten aus dem Auslaß 70 gespeichert werden kann, um möglichst wenig Öl aus dem Auslaß 70 austreten zu lassen.

Ferner hat dieser durch den Steigkanal 66 gebildete Ölspeicher noch den Vorteil, daß bei Auftreten von Unterdruck im Innenraum 34 des Kompressors, welcher sich durch die Gleitringdichtung 26 hindurch auch auf den Ölaufnahmeraum 42 auswirkt, das zwischen dem Durchlaß 82 und den Einlaß 84 der Nut 64 gebildete Ölbad 90 auch in diesem Fall mit Öl zu versorgen, welches dann durch diesen "Siphon" hindurch die Möglichkeit hat, wieder in den Ölaufnahmeraum 42 einzutreten und die Gleitringdichtung 26 sekundärseitig, das heißt von seiten des Ölaufnahmeraums 42, zu schmieren.

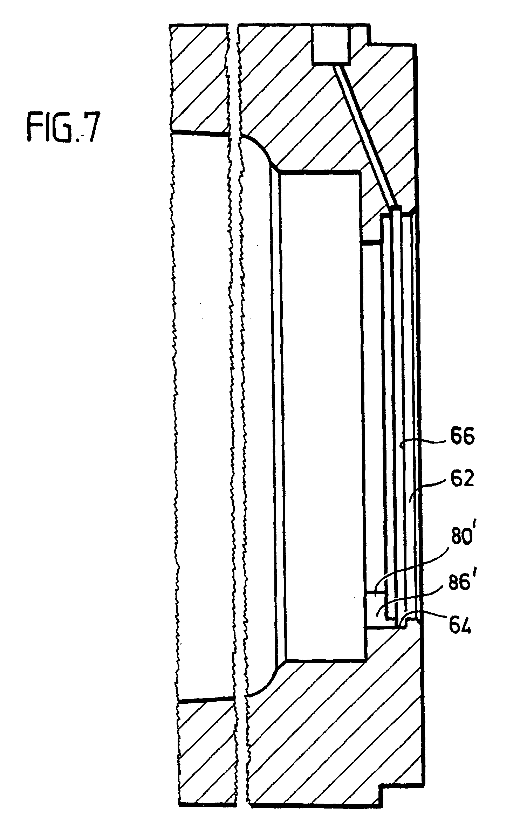

Bei einem zweiten Ausführungsbeispiel einer erfindungsgemäßen Lösung, dargestellt in den Fig. 7 bis 9, ist die Tasche 80' derart ausgebildet, daß sie den Flansch 54 vollständig durchsetzt und somit die Seitenwände 86' der Tasche 80' sich bis zum feststehenden Element 30 der Gleitringdichtung 26 erstrecken. Durch die Vergrößerung der Tasche 80' erstreckt sich auch das unter dem Ölsammelbereich 60' des Ölaufnahmeraums 42 liegende Ölbad 90' zwischen dem feststehenden Element 30 und der äußeren Dichtung 36, wobei nach wie vor durch den Übergang von der Tasche 80' über den Einlaß 84 in die Nut 64 eine Siphonanordnung geschaffen ist, die ein Eindringen von Luft über den Steigkanal 66 in den Ölaufnahmeraum 42 verhindert.

Im übrigen sind bei dem zweiten Ausführungsbeispiel diejenigen Teile, die mit denen des ersten Ausführungsbeispiels identisch sind, mit denselben Bezugszeichen versehen, so daß hinsichtlich der Beschreibung derselben auf die Ausführungen zum ersten Ausführungsbeispiel vollinhaltlich Bezug genommen wird.

## Patentansprüche

1. Kompressor für Kältemittel, umfassend ein Gehäuse (10), mindestens ein in dem Gehäuse (10) angeordnetes kältemittelkomprimierendes Element (12), eine Welle (14), welche einen in dem Gehäuse (10) verlaufenden und das kältemittelkomprimierende Element (12) antreibenden Abschnitt (16), einen eine Wand (22) des Gehäuses (10) durchsetzenden Abschnitt (20) und einen aus dem Gehäuse (10) herausragenden Antriebsabschnitt (18) aufweist, sowie eine zwischen dem die Wand (22) durchsetzenden Abschnitt (20) der Welle (14) und dem Gehäuse (10) wirksame Dichtungsanordnung (24) mit einer Gleitringdichtung (26) und einem Ölaufnahmeraum (42) zur Aufnahme von durch die Gleitringdichtung (26) hindurchgetretenem Öl, welcher einen Ölsammelbereich (60) aufweist, aus dem Öl über einen Ölablauf abführbar ist, **dadurch gekennzeichnet,daß** der Ölaufnahmeraum (42) zwischen einem äußeren Dichtring (36) und der Gleitringdichtung (26) angeordnet ist und daß der Ölsammelbereich (60) des Ölaufnahmeraums (42) über eine Siphonanordnung (80, 84) mit einem Steigkanal (66) in Verbindung steht, welcher zu einem Auslaß (70) für das Öl führt.

2. Kompressor nach Anspruch 1, **dadurch gekennzeichnet, daß** der Steigkanal (66) als Ölspeicher ausgebildet ist.

3. Kompressor nach Anspruch 1 oder 2, **dadurch gekennzeichnet, daß** der Steigkanal (66) entlang einer Gehäusewand (38) verläuft.

4. Kompressor nach Anspruch 3, **dadurch gekennzeichnet, daß** der Steigkanal (66) in der Gehäusewand (38) verläuft.

5. Kompressor nach einem der voranstehenden Ansprüche, **dadurch gekennzeichnet, daß** der Steigkanal (66) als die Welle (14) umgebender Ringkanal ausgebildet ist.

6. Kompressor nach einem der voranstehenden Ansprüche, **dadurch gekennzeichnet, daß** der Steigkanal (66) durch zwei zusammenwirkende Elemente (64, 44) gebildet ist.

7. Kompressor nach Anspruch 6, **dadurch gekennzeichnet, daß** eines der Elemente (64) durch einen Abschnitt der Gehäusewand (38) und das andere (44) durch ein an dem Abschnitt anliegendes Einsatzteil (36) gebildet ist.

8. Kompressor nach Anspruch 6 oder 7, **dadurch gekennzeichnet, daß** eines der Elemente eine Nut (64) aufweist.

9. Kompressor nach Anspruch 8, **dadurch gekennzeichnet, daß** das andere (44) der Elemente die Nut (64) abdeckt.

10. Kompressor nach einem der voranstehenden Ansprüche, **dadurch gekennzeichnet, daß** der Steigkanal (66) innerhalb einer Außenkontur des Gehäuses liegt.

11. Kompressor nach einem der Ansprüche 6 bis 10, **dadurch gekennzeichnet, daß** beide zur Bildung des Steigkanals (66) zusammenwirkende Elemente (64, 44) innerhalb einer Außenkontur des Gehäuses (10) liegen.

12. Kompressor nach einem der Ansprüche 1 bis 11, **dadurch gekennzeichnet, daß** eines der Elemente (44) von der äußeren Dichtung (36) des Kompressors gebildet ist.

13. Kompressor nach einem der voranstehenden Ansprüche, **dadurch gekennzeichnet, daß** die Siphonanordnung ein einen Einlaß (84) des Steigkanals (66) abschließendes Ölbad (90) umfaßt.

14. Kompressor nach Anspruch 13, **dadurch gekennzeichnet, daß** sich das Ölbad (90) in einer vor dem Einlaß (84) des Steigkanals (66) liegenden Ausnehmung (80) bildet.

15. Kompressor nach Anspruch 14, **dadurch gekennzeichnet, daß** die Ausnehmung (80) in der Gehäusewand (38) angeordnet ist.

16. Kompressor nach Anspruch 14 oder 15, **dadurch gekennzeichnet, daß** die Ausnehmung (80) sich an die den Steigkanal (66) bildende Nut (64) anschließt und mit dieser überlappt.

17. Kompressor nach einem der voranstehenden Ansprüche, **dadurch gekennzeichnet, daß** der Steigkanal (66) in einen zum Auslaß (70) führenden Auslaßkanal (68) mündet.

18. Kompressor nach einem der voranstehenden Ansprüche, **dadurch gekennzeichnet, daß** der Auslaß (70) mit einem öldurchlässigen Körper (74) verschlossen ist.

19. Kompressor nach einem der voranstehenden Ansprüche, **dadurch gekennzeichnet, daß** der Auslaß (70) auf einer dem ölsammelbereich (60) gegenüberliegenden Seite der Welle angeordnet ist.

20. Kompressor nach Anspruch 19, **dadurch gekennzeichnet, daß** der Auslaß (70) mindestens in Höhe einer maximalen Höhe des Ölaufnahmeraums (42) angeordnet ist.

## Claims

1. Compressor for refrigerant, comprising a housing (10), at least one refrigerant-compressing element (12) arranged in the housing (10), a shaft (14) having a section (16) extending in the housing (10) and driving the refrigerant-compressing element (12), a section (20) passing through a wall (22) of the housing (10) and a drive section (18) projecting out of the housing (10) as well as a sealing arrangement (24) effective between the section (20) of the shaft (14) passing through the wall (22) and the housing (10), with a slide ring seal (26) and an oil receiving chamber (42) for receiving oil which has passed through the slide ring seal (26), said oil receiving chamber having an oil collecting area (60) from which oil is dischargeable via an oil outlet, **characterized in that** the oil receiving chamber (42) is arranged between an outer sealing ring (36) and the slide ring seal (26), and **in that** the oil collecting area (60) of the oil receiving chamber (42) communicates via a siphon arrangement (80, 84) with an ascending channel (66) leading to an outlet (70) for the oil.

2. Compressor as defined in claim 1, **characterized in that** the ascending channel (66) is designed as an oil storage means.

3. Compressor as defined in claim 1 or 2, **characterized in that** the ascending channel (66) extends along a housing wall (38).

4. Compressor as defined in claim 3, **characterized in that** the ascending channel (66) extends in the housing wall (38).

5. Compressor as defined in any one of the preceding claims, **characterized in that** the ascending channel (66) is designed as an annular channel surrounding the shaft (14).

6. Compressor as defined in any one of the preceding claims, **characterized in that** the ascending channel (66) is formed by two interacting elements (64, 44).

7. Compressor as defined in claim 6, **characterized in that** one of the elements (64) is formed by a section of the housing wall (38) and the other (44) by an insert member (36) abutting on the section.

8. Compressor as defined in claim 6 or 7, **characterized in that** one of the elements has a groove (64).

9. Compressor as defined in claim 8, **characterized in that** the other (44) one of the elements covers the groove (64).

10. Compressor as defined in any one of the preceding claims, **characterized in that** the ascending channel (66) is located within an outer contour of the housing.

11. Compressor as defined in any one of claims 6 to 10, **characterized in that** the elements (64, 44) interacting to form the ascending channel (66) are both located within an outer contour of the housing (10).

12. Compressor as defined in any one of claims 1 to 11, **characterized in that** one of the elements (44) is formed by the outer seal (36) of the compressor.

13. Compressor as defined in any one of the preceding claims, **characterized in that** the siphon arrangement comprises an oil bath (90) shutting off an inlet (84) of the ascending channel (66).

14. Compressor as defined in claim 13, **characterized in that** the oil bath (90) is formed in a recess (80) located in front of the inlet (84) of the ascending channel (66).

15. Compressor as defined in claim 14, **characterized in that** the recess (80) is arranged in the housing wall (38).

16. Compressor as defined in claim 14 or 15, **characterized in that** the recess (80) adjoins the groove (64) forming the ascending channel (66) and overlaps with it.

17. Compressor as defined in any one of the preceding claims, **characterized in that** the ascending channel (66) opens into an outlet channel (68) leading to the outlet (70).

18. Compressor as defined in any one of the preceding claims, **characterized in that** the outlet (70) is closed by a member (74) permeable to oil.

19. Compressor as defined in any one of the preceding claims, **characterized in that** the outlet (70) is arranged on a side of the shaft located opposite the oil collecting area (60).

20. Compressor as defined in claim 19, **characterized in that** the outlet (70) is arranged at least at the level of a maximum height of the oil receiving chamber (42).

## Revendications

1. Compresseur pour un milieu de refroidissement, comprenant un carter (10), au moins un élément (12) disposé dans le carter (10) et comprimant le milieu de refroidissement, un arbre (14), qui comporte une partie (16) qui s'étend dans le carter (10) et entraîne l'élément (12) comprimant le milieu de refroidissement, une partie (20) qui traverse une paroi (22) du carter (10), et une partie d'entraînement (18), qui. ressort hors du carter (10), ainsi qu'un dispositif d'étanchéité (24), qui agit entre la partie (20) de l'arbre (14), qui traverse la paroi (22), et le carter (10) et qui comporte une bague d'étanchéité coulissante (26) et une chambre (42) de réception d'huile qui sert à loger de l'huile qui a traversé la bague d'étanchéité coulissante (26) et qui possède une zone de collecte d'huile (60), à partir de laquelle de l'huile peut être évacuée par l'intermédiaire d'une évacuation pour l'huile, **caractérisé en ce que** la chambre (42) de réception de l'huile est disposée entre une bague d'étanchéité extérieure (36) et la bague d'étanchéité coulissante (26) et que la zone (60) de collecte de l'huile de la chambre (42) de réception de l'huile est reliée par l'intermédiaire d'un dispositif à siphon (88, 84) à un canal montant (16, 66), qui aboutit à une sortie (70) pour l'huile.

2. Compresseur selon la revendication 1, **caractérisé en ce que** le canal montant (66) est agencé sous la forme d'un accumulateur d'huile.

3. Compresseur selon la revendication 1 ou 2, **caractérisé en ce que** le montant (66) s'étend le long d'une paroi (38) du carter.

4. Compresseur selon la revendication 3, **caractérisé en ce que** le canal montant (66) s'étend dans la paroi (38) du carter.

5. Compresseur selon l'une des revendications précédentes, **caractérisé en ce que** le canal montant (66) est agencé sous la forme d'un canal annulaire entourant l'arbre (14).

6. Compresseur selon l'une des revendications précédentes, **caractérisé en ce que** le canal montant (66) est formé par deux éléments coopérants (64, 44).

7. Compresseur selon la revendication 6, **caractérisé en ce que** l'un des éléments (64) est formé par une partie de la paroi (38) du carter et que l'autre élément (44) est formé par un insert (36) s'appliquant sur la partie.

8. Compresseur selon la revendication 6 ou 7, **caractérisé en ce que** l'un des éléments comporte une rainure (64).

9. Compresseur selon la revendication 8, **caractérisé** en ce l'autre (44) des éléments recouvre la rainure (64).

10. Compresseur selon l'une des revendications précédentes, **caractérisé en ce que** le canal montant (66) est situé à l'intérieur d'un contour extérieur du carter.

11. Compresseur selon l'une des revendications 6 à 10, **caractérisé en ce que** les deux éléments (64, 44), qui coopèrent pour former le canal montant (66), sont situés à l'intérieur d'un contour extérieur du carter (10).

12. Compresseur selon l'une des revendications 1 à 11, **caractérisé en ce que** l'élément (44) est formé par la garniture d'étanchéité extérieure (36) du compresseur.

13. Compresseur selon l'une des revendications précédentes, **caractérisé en ce que** le dispositif formant siphon comprend un bain d'huile (90) formant une entrée (84) du canal montant (66).

14. Compresseur selon la revendication 13, **caractérisé en ce que** le bain d'huile (90) est formé dans un évidement (80) situé devant l'entrée (84) du canal montant (66).

15. Compresseur selon la revendication 14, **caractérisé en ce que** l'évidement (80) est disposé dans la paroi (36) du boîtier.

16. Compresseur selon la revendication 14 ou 15, **caractérisé en ce que** l'évidement (80) se raccorde à la rainure correspondante (64) constituant le canal montant (66) et chevauche ce dernier.

17. Compresseur selon l'une des revendications précédentes, **caractérisé en ce que** le canal montant (66) débouche dans un canal de sortie (68) aboutissant à la sortie (70).

18. Compresseur selon l'une des revendications précédentes, **caractérisé en ce que** la sortie (70) est fermée sur un corps (74) perméable à l'huile.

19. Compresseur selon l'une des revendications précédentes, **caractérisé en ce que** la sortie (70) est disposée sur un côté de l'arbre, situé à l'opposé de la zone (60) de collecte de l'huile.

20. Compresseur selon la revendication 19, **caractérisé en ce que** la sortie (70) est disposée au moins au niveau d'une hauteur maximale de la chambre (42) de réception d'huile.
